**Europäisches Patentamt**

**European Patent Office**

**Office européen des brevets**

(19)

(11) Veröffentlichungsnummer: **0 086 378
B1**

(12)

# EUROPÄISCHE PATENTSCHRIFT

(45) Veröffentlichungstag der Patentschrift:
11.09.85

(51) Int. Cl.⁴: **C 03 B 37/025**, C 03 C 17/02

(21) Anmeldenummer: 83100804.0

(22) Anmeldetag: 28.01.83

(54) **Plasmaverfahren zur Innenbeschichtung von Glasrohren.**

(30) Priorität: 11.02.82 DE 3204846

(43) Veröffentlichungstag der Anmeldung:
24.08.83 Patentblatt 83/34

(45) Bekanntmachung des Hinweises auf die Patenterteilung:
11.09.85 Patentblatt 85/37

(84) Benannte Vertragsstaaten:
DE FR GB IT NL

(56) Entgegenhaltungen:
FR - A - 2 427 310
FR - A - 2 450 239
US - A - 4 280 829

(73) Patentinhaber: International Standard Electric
Corporation, 320 Park Avenue, New York New
York 10022 (US)
(84) Benannte Vertragsstaaten: FR GB IT NL

(73) Patentinhaber: Standard Elektrik Lorenz
Aktiengesellschaft, Hellmuth-Hirth-Strasse 42,
D-7000 Stuttgart 40 (DE)
(84) Benannte Vertragsstaaten: DE

(73) Patentinhaber: Schott Glaswerke, Hattenbergstrasse 10,
D-6500 Mainz (DE)
(84) Benannte Vertragsstaaten: DE FR IT NL

(73) Patentinhaber: Carl-Zeiss-Stiftung trading as SCHOTT
GLASWERKE, Hattenbergstrasse 10,
D-6500 Mainz 1 (DE)
(84) Benannte Vertragsstaaten: GB

(72) Erfinder: Beerwald, Hans, Dr., Kalkgasse 2,
D-5370 Kall-Sistig (DE)
Erfinder: Böhm, Günter, Dr., Haarholzer Strasse 21,
D-4630 Bochum (DE)
Erfinder: Glomski, Günter, Dr., Zeppelinstrasse 5,
D-4630 Bochum (DE)
Erfinder: Wittmann, Manfred, Dr., Karlstrasse 10,
D-7145 Hardthof (DE)

(74) Vertreter: Graf, Georg Hugo, Dipl.-Ing. et al, c/o
Standard Elektrik Lorenz AG Patent- und Lizenzwesen
Postfach 300 929 Kurze Strasse 8,
D-7000 Stuttgart 30 (DE)

## Beschreibung

Die Erfindung betrifft ein Plasmaverfahren zur Innenbeschichtung von Glasrohren durch reaktive Abscheidung aus einem durch das Rohr strömenden Gas im Druckbereich 1 bis 100 mbar, wobei die Plasmazone relativ zum Rohr in Achsrichtung bewegt wird. Naturgemäß existiert in Achsrichtung ein Druckgefälle.

Derartige Verfahren werden für die Herstellung von Lichtleitfasern für die Nachrichtentechnik benötigt. Quarzglasrohre, deren Innenwände mit dotiertem Quarzglas beschichtet sind, werden zu Stäben verarbeitet, die dann zu Fasern gezogen werden.

Beschichtungsverfahren mit axial bewegter Plasmazone gehören zum Stand der Technik (DE-OS 2 328 930, DE-PS 2 444 100, DE-PS 2 642 949, DE-OS 2 712 993, DE-OS 2 804 125, DE-OS 2 929 166). Diese Verfahren haben den Nachteil, daß sich der Plasmazustand während der axialen Bewegung der Plasmazone ändert. Elektronentemperatur, Ionisationsgrad, Gastemperatur und auch die absorbierte elektrische Leistung ändern sich mit Gasdichte und Strömungsgeschwindigkeit längs des Rohres. Um eine Beschichtung möglichst gleicher Qualität längs des Rohres zu erzielen, wird entweder der Gasdurchsatz niedrig gehalten oder eine hohe Gasdichte gewählt. Beides führt zur Verminderung des relativen Druckunterschiedes zwischen Rohranfang und Rohrende.

Niedriger Gasdurchsatz bedeutet geringe Beschichtungsgeschwindigkeit; hoher Gasdruck führt zu unerwünschter Partikelbildung im Gasvolumen (J. Irven, A. Robinson: »Optical fibres produced by plasma augmented vapour deposition«, Physics & Chem. of Glasses, Vol. 21 (1980)).

Der Erfindung liegt die Aufgabe zu Grunde, den Plasmazustand während der axialen Verschiebung konstant zu halten.

Diese Aufgabe wird erfindungsgemäß dadurch gelöst, daß bei konstant gehaltenem Gasdurchsatz die Gasdichte in der Plasmazone oder eine von ihr abhängige elektrische Größe durch Steuerung der Sauggeschwindigkeit konstant gehalten wird.

Bei Gasdrucken > 1 mbar und Rohrradien in der Größenordnung 1 cm wird bei steigendem Gasdruck (Gasdichte) die Elektronendichte niedriger und die Elektronenstoßfrequenz höher. Beides führt zu einer Verringerung der Plasmaleitfähigkeit, d. h. zur Erhöhung der Plasmaimpedanz.

Um zusätzliche elektrische Vorrichtungen zu vermeiden, kann man, entsprechend den beiden Unteransprüchen, die Impedanz der plasmaerzeugenden Vorrichtung zur Steuerung der Sauggeschwindigkeit verwenden. Meistens wird ein von der Impedanz abhängiger Spannungs- oder Stromwert für die Steuerung ausreichen.

Der mit der Erfindung erzielte Vorteil besteht darin, daß bei niedrigen Gasdichten oder hohen Gasdurchsätzen eine sehr gleichmäßige Beschichtung längs des Rohres erreicht wird. Bei einer vorgegebenen Gasdichte kann gegenüber den bisher bekannten Verfahren der Gasdurchsatz und damit die Beschichtungsgeschwindigkeit erhöht werden.

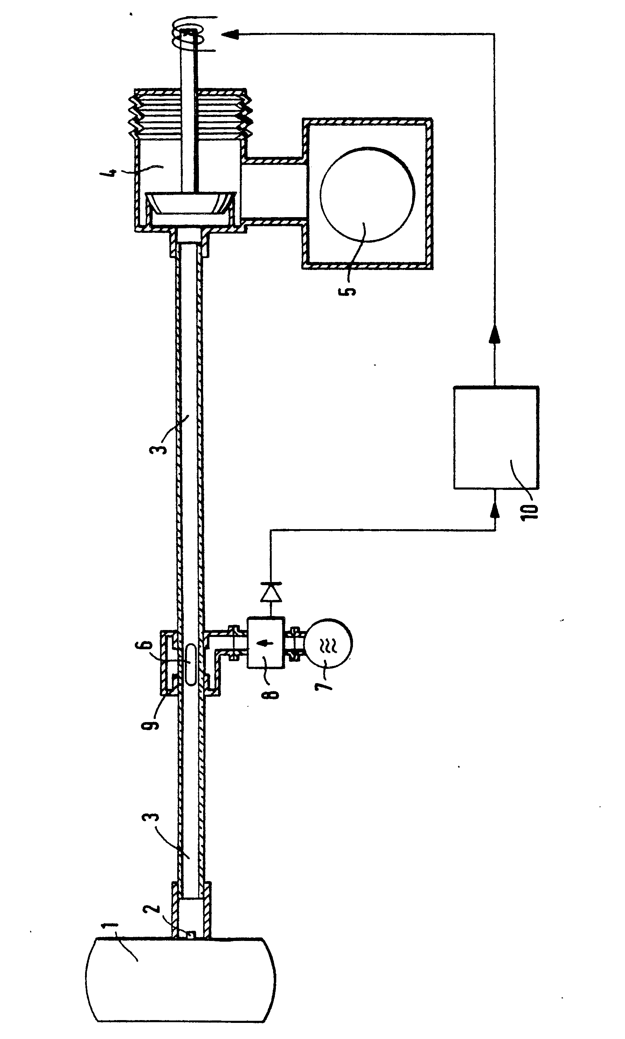

Ein Ausführungsbeispiel der Erfindung nach Patentanspruch 3 ist in der Zeichnung dargestellt. Im Vorkessel 1 befindet sich ein Gasgemisch aus $O_2$ und $SiCl_4$ im Molverhältnis 4 : 1; der Gasdruck wird auf 200 mbar konstant gehalten. Das Gasgemisch strömt durch die Düse 2 in das zu beschichtende Quarzrohr 3. Der kleinste Durchmesser der Düse 2 beträgt 1 mm. Der Gasdruck am Rohranfang ist in diesem Ausführungsbeispiel stets niedriger als 20 mbar, so daß wegen Verblockung der Gasströmung durch die Düse 2 der Gasdurchsatz 40 mbar l/s beträgt und unabhängig von der Stellung des mehr oder weniger geöffneten Ventils 4 ist. Das Saugvermögen der Vakuumpumpe 5 beträgt 100 m³/h. Die Plasmazone 6 wird mittels Mikrowellenleistung (2 kW bei 2,45 GHz) erzeugt. Die gesamte Mikrowellenarmatur, bestehend aus Magnetron 7, Einwegleitung 8 (Zirkulator mit Wasserlast) und plasmaerzeugende Vorrichtung 9, wird viermal pro Minute über eine Rohrlänge von 1 m hin und her bewegt. Der Zirkulator 8 besitzt an seiner Wasserlast eine Sonde mit Detektordiode, deren Ausgangsspannung proportional der reflektierten Mikrowellenleistung ist, die 5 bis 10% der hinlaufenden Leistung beträgt. Mit Hilfe eines elektronischen Komparators 10 wird das elektromagnetische Ventil 4 so gesteuert, daß die Ausgangsspannung der Detektordiode konstant bleibt. Der Komparator wird so eingestellt, daß, wenn sich die Plasmazone am Rohranfang befindet, das Ventil 4 weit geöffnet ist. Beim Verschieben der Plasmazone zum Rohrende hin wird die Sauggeschwindigkeit mittels des Ventils 4 automatisch gedrosselt; beim Zurückfahren der Plasmazone öffnet sich wieder das Ventil. Im vorliegenden Beispiel variiert der Gasdruck am Rohrende zwischen 5 und 7 mbar. Die Beschichtung mit $SiO_2$ erfolgt mit einer Geschwindigkeit von 1,2 g/min.

## Patentansprüche

1. Plasmaverfahren zur Innenbeschichtung von Glasrohren durch reaktive Abscheidung aus einem durch das Rohr strömenden Gas im Druckbereich 1 bis 100 mbar, wobei die Plasmazone relativ zum Rohr in Achsrichtung bewegt wird, dadurch gekennzeichnet, daß bei konstant gehaltenem Gasdurchsatz die Gasdichte in der Plasmazone oder eine von ihr abhängige elektrische Größe durch Steuerung der Sauggeschwindigkeit konstant gehalten wird.

2. Plasmaverfahren nach Anspruch 1, dadurch gekennzeichnet, daß die Steuerung der Sauggeschwindigkeit so erfolgt, daß die Impedanz der plasmaerzeugenden Vorrichtung konstant gehalten wird.

3. Plasmaverfahren nach Anspruch 2, dadurch gekennzeichnet, daß ein Meßsignal der von der plasmaerzeugenden Vorrichtung reflektierten elektrischen Leistung die Sauggeschwindigkeit so steuert, daß das Meßsignal nach Betrag und/ oder Phase konstant bleibt.

## Claims

1. Plasma method for coating the inside surface of a glass tube by reactive deposition from a gas flowing through the tube and having a pressure ranging from 1 to 100 mbar, the plasma zone being moved relatively to the tube in the axial direction, characterized in that, with the gas flow kept constant, the gas density in the plasma zone or an electrical variable dependent thereon is kept constant by controlling the rate of evacuation.

2. A plasma method as claimed in Claim 1, characterized in that the control of the rate of evacuation is effected in such a way that the impedance of the plasma-producing device is kept constant.

3. A plasma method as claimed in Claim 2, characterized in that a signal measuring the electric power reflected from the plasma-producing device controls the rate of evacuation in such a way that the measuring signal remains constant in magnitude and/or phase.

## Revendications

1. Procédé au plasma pour revêtir intérieurement des tubes de verre par dépôt réactif à partir d'un gaz s'écoulant par le tube, ayant une pression de la 1 à 100 mbar, la zone de plasma étant déplacée en direction axiale, par rapport au tube, caractérisé en que, le débit de gaz étant maintenu constant, la densité du gaz dans la zone de plasma, ou une grandeur électrique en dépendant, est maintenue constante par commande de la vitesse d'aspiration.

2. Procédé au plasma selon la revendication 1, caractérisé en ce que la commande de la vitesse d'aspiration s'effectue de façon que l'impédance du dispositif générateur de plasma soit maintenue constante.

3. Procédé au plasma selon la revendication 2, caractérisé en ce qu'un signal de mesure de la puissance électrique réfléchie par le dispositif générateur de plasma commande la vitesse d'aspiration de façon que le signal de mesure reste constant en valeur absolue et/ou en phase.